Europäisches Patentamt

European Patent Office

Office européen des brevets

(19)

(11) EP 0 750 103 B1

(12) **EUROPEAN PATENT SPECIFICATION**

(45) Date of publication and mention
of the grant of the patent:
**28.08.2002 Bulletin 2002/35**

(51) Int Cl.[7]: **F02D 21/08**, F02D 35/00,
F02D 43/00

(21) Application number: **96109325.9**

(22) Date of filing: **11.06.1996**

(54) **Exhaust gas recirculation system for an internal combustion engine**

Abgasrückführungssystem für eine Brennkraftmaschine

Système de recirculation de gaz d'échappement pour un moteur à combustion interne

(84) Designated Contracting States:
**DE FR GB**

(30) Priority: **21.06.1995 JP 15457095**

(43) Date of publication of application:
**27.12.1996 Bulletin 1996/52**

(73) Proprietor: **TOYOTA JIDOSHA KABUSHIKI
KAISHA
Aichi-ken (JP)**

(72) Inventors:
• **Fukuma, Takao, c/o Toyota Jidosha K.K.
Toyota-shi, Aichi (JP)**
• **Takemoto, Eiji, c/o Nippondenso Co., Ltd.
Kariya-city, Aichi-pref. 448 (JP)**
• **Hidaka, Shigeki, c/o Nippondenso Co., Ltd.
Kariya-city, Aichi-pref. 448 (JP)**

(74) Representative:
**Winter, Brandl, Fürniss, Hübner, Röss, Kaiser,
Polte Partnerschaft
Patent- und Rechtsanwaltskanzlei
Alois-Steinecker-Strasse 22
85354 Freising (DE)**

(56) References cited:
**US-A- 4 448 177          US-A- 4 757 683**

• **PATENT ABSTRACTS OF JAPAN vol. 014, no.
198 (M-0965), 23 April 1990 & JP 02 040036 A
(MAZDA MOTOR CORP), 8 February 1990**
• **PATENT ABSTRACTS OF JAPAN vol. 015, no.
329 (M-1149), 21 August 1991 & JP 03 125031 A
(SUZUKI MOTOR CORP;OTHERS: 01), 28 May
1991**

EP 0 750 103 B1

## Description

BACKGROUND OF THE INVENTION

1. Field of the Invention

The present invention relates to an exhaust gas recirculation system for an engine.

2. Description of the Related Art

Japanese Unexamined Patent Publication No. 5-332202 discloses an exhaust gas recirculation (EGR) system for an engine having an EGR gas passage connecting an intake passage and an exhaust passage to each other. An EGR gas control valve is arranged in the EGR gas passage to control an amount of the EGR gas flowing through the EGR gas passage. The EGR system is provided with; target opening calculating means for calculating a target opening of the EGR gas control valve, which target opening being determined in accordance with the engine operating condition; output value calculating means for calculating an output value corresponding to the target opening; opening detecting means for detecting an actual opening of the EGR gas control valve; feedback correcting means for feedback correcting the output value calculated by the output value calculating means in accordance with output signals from the opening detecting means, using a feedback correction coefficient, to make the actual opening of the EGR gas control valve equal to the target opening; and opening changing means for changing the opening of the EGR gas control valve in accordance with the corrected output value.

In this known system, the output value is corrected using the feedback correction coefficient to thereby reduce a deviation of the actual opening of the EGR gas control valve, from the target opening, as much as possible, to thereby prevent an enhancement of the engine emission performance, due to the EGR gas, from deteriorating.

However, the deviation of the actual opening from the target opening is not made sufficiently small, in particular, just after the target opening changes, even when the feedback correction control is made as in the above system. Therefore, a feedforward correction control based on a change rate of the target opening, using a feedforward correction coefficient, may be performed, as well as the feedback correction control, to correct the output value to thereby decrease the deviation of the actual opening from the target opening, as much as possible, just after the change in the target opening.

On the other hand, the engine operating condition actually fluctuates, more or less, even though it is judged to be in a substantially stable condition. Thus, the target opening also fluctuates, and the amplitude thereof is relatively small. However, if the feedforward correction control is carried out, the actual opening also fluctuates, and the amplitude thereof is larger than that of the target opening. The amplitude of the actual opening in this condition is substantially constant, regardless the actual or the target opening. In other words, the deviation of the actual opening from the target opening, which results when the actual opening fluctuates, is substantially constant, regardless the target opening. Accordingly, if the actual opening fluctuates when the target opening is relatively small, a ratio of the deviation of the actual opening from the target opening, relative to the target opening, becomes larger. Namely, the enhancement of the engine emission performance by the EGR gas deteriorates more when the target opening becomes smaller.

SUMMARY OF THE INVENTION

An object of the present invention is to provide an exhaust gas recirculation system able to ensure the enhancement of the engine emission performance by the EGR gas, even when the target opening of the EGR gas control valve is small.

According to the present invention, there is provided an exhaust gas recirculation system, for an engine having an intake passage and an exhaust passage, the system comprising: an EGR gas passage connecting the intake and the exhaust passages to each other; an EGR gas control valve arranged in the EGR gas passage for controlling an amount of the EGR gas flowing through the EGR gas passage; target opening calculating means for calculating a target opening of the EGR gas control valve in accordance with an engine operating condition; output value calculating means for calculating an output value corresponding to the target opening; opening detecting means for detecting an actual opening of the EGR gas control valve; feedback correcting means for correcting the output value calculated by the output value calculating means in accordance with output signals from the opening detecting means, using a feedback correction coefficient, to make the actual opening of the EGR gas control valve equal to the target opening; feedforward correcting means for correcting the output value calculated by the output value calculating means in accordance with a change rate of the target opening, using a feedforward correction coefficient, to make the actual opening of the EGR gas control valve equal to the target opening; feedforward correction control reducing means for reducing the feedforward correction control by the feedforward correcting means, the feedforward correction control reducing means reducing the feedforward correction control more when the target opening becomes smaller; and opening changing means for changing the opening of the EGR gas control valve in accordance with the corrected output value.

The present invention may be more fully understood from the description of the preferred embodiments of the invention as set forth below, together with the accompanying drawings.

BRIEF DESCRIPTION OF THE DRAWINGS

In the drawings:

Fig. 1 is a general view of an engine;
Fig. 2 is a diagram illustrating a target opening of an EGR gas control valve;
Fig. 3 is a diagram illustrating a proportional term and a renewal value of an integral term;
Fig. 4 is a diagram illustrating a coefficient KD;
Fig. 5 is a time chart illustrating undesirable examples;
Fig. 6 is a time charts illustrating an embodiment according to the present invention;
Fig. 7 shows a flowchart for executing a determination;
Fig. 8 shows a flowchart for executing a correction control;
Fig. 9 is a diagram illustrating a coefficient KD21;
Fig. 10 is a diagram illustrating a coefficient KD22;
Fig. 11 is a diagram illustrating a coefficient KD3;
Fig. 12 is a diagram illustrating a coefficient KD4;
Fig. 13 shows a flowchart for executing a correction control, according to another embodiment of the present invention;
Fig. 14 shows a flowchart for calculating a coefficient KD2;
Fig. 15 shows a flowchart for calculating a coefficient KD3; and
Fig. 16 shows a flowchart for calculating a coefficient KD4.

DESCRIPTION OF THE PREFERRED EMBODIMENTS

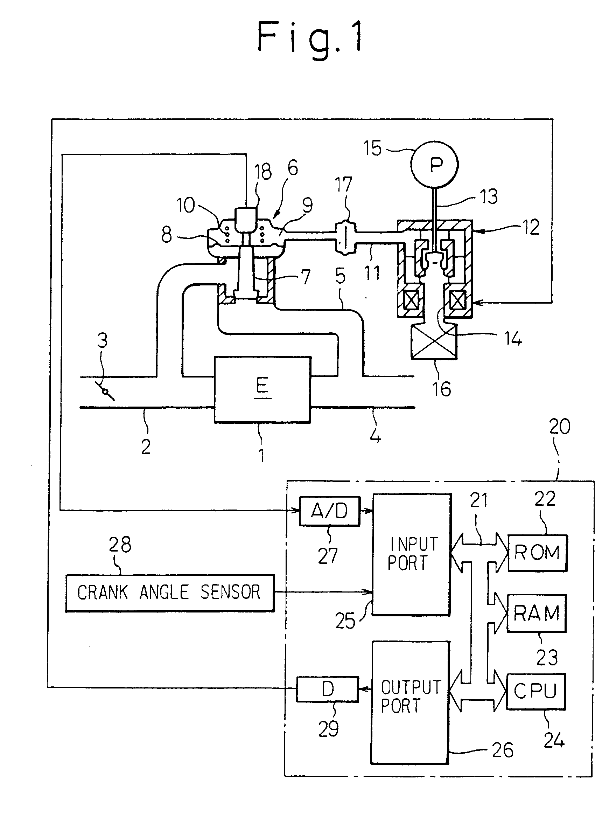

Fig. 1 illustrates the present invention applied to a diesel engine. Alternatively, the present invention may be applied to a spark-ignition engine.

Referring to Fig. 1, a reference numeral 1 designates an engine body, 2 designates an intake passage, 3 designates a throttle valve arranged in the intake passage 2, 4 designates an exhaust passage. Further, 5 designates an EGR gas passage connecting the intake passage 2 downstream of the throttle valve 3 and the exhaust passage 4, and 6 designates an EGR gas control valve arranged in the EGR gas passage 5. The intake passage 2 includes a surge tank, and the surge tank is connected to each cylinder of the engine via corresponding branch passages. The exhaust passage 3 includes an exhaust manifold common to the cylinders, and the exhaust manifold is connected to a catalytic convertor (not shown). The EGR gas passage 5 extends between, for example, the surge tank and the exhaust manifold.

As shown in Fig. 1, the EGR gas control valve 6 has an axially displacable valve body 7, a diaphragm 8 to which the valve body 7 is fixed, a vacuum chamber 9 defined by the diaphragm 8, and a return spring 10 arranged in the vacuum chamber 9 to bias the diaphragm 8 to make the displacement thereof smaller. The vacuum chamber 9 is connected to a vacuum control valve 12 via a vacuum introducing passage 11. The vacuum control valve 12 selectively connects the vacuum introducing passage 11 to one of a vacuum passage 13 and an atmosphere passage 14. The vacuum passage 13 is connected to a vacuum pump 15 driven by, for example, the engine, and the atmosphere passage 14 communicates with the atmosphere via an air-cleaner 16. The vacuum introducing passage 11 includes a vacuum damper 17 therein. Note that the vacuum control valve 12 is controlled by signals output from an electronic control unit 20.

When the vacuum introducing passage 11 is connected to the atmosphere passage 14 via the vacuum control valve 12, atmospheric pressure is led into the vacuum chamber 9. This makes the displacement of the diaphragm 8 substantially equal to zero, and thus the EGR gas control valve 6 is closed. When the EGR gas control valve 6 is closed, there is no EGR gas flow through the EGR gas passage 5. Contrarily, when the vacuum introducing passage 11 is connected to the vacuum passage 13 via the vacuum control valve 12, the negative pressure produced by the vacuum pump 15 is led into the vacuum chamber 9. When the opening force due to the negative pressure in the vacuum chamber 9 prevails over the closing force due to the return spring 10, the diaphragm 8 displaces to displace the valve body 7 axially, that is, upwardly in Fig. 1. Thus, the EGR gas control valve 6 opens. As the vacuum in the vacuum chamber 9 becomes larger, the displacement of the diaphragm 8 becomes larger, and the opening of the EGR gas control valve also becomes larger. When the EGR gas control valve is opened, the EGR gas is supplied to the engine through the EGR gas passage 5. As the opening of the EGR gas control valve becomes larger, the amount of the supplied EGR gas becomes larger, at a constant engine operating condition. Note that the vacuum control valve 12 is controlled in accordance with a duty ratio, which is a ratio of a period in which the vacuum chamber 9 is to be connected to the vacuum passage 13, to a duty cycle time. The atmospheric pressure is fully introduced in the vacuum chamber 9 when the duty ratio is 0%, and the negative pressure produced by the vacuum pump 15 is fully introduced in the vacuum chamber 9 when the duty ratio is 100%.

An opening sensor 18 is provided to the EGR gas control valve 6, to detect an actual opening of the EGR gas control valve 6. The sensor 18 actually detects an axial displacement of the valve body 7. As mentioned above, the actual opening of the EGR gas control valve 6 becomes larger as the axial displacement of the valve body 7 becomes larger. Thus, the actual opening of the EGR gas control valve 6 is detected by detecting the axial displacement of the valve body 7.

The electronic control unit (ECU) 20 is constructed as a digital computer and comprises a read-only memory (ROM) 22, a random-access memory (RAM) 23, the CPU (micro processor) 24, an input port 25, and an output port 26. ROM 22, RAM 23, CPU 24, the input port 25, and the output port 26 are interconnected with each other via a bidirectional bus 21. The opening sensor 18 generates an output voltage in proportion to the axial displacement of the valve body 7 of the EGR gas control valve 6, and this output voltage is input to the input port 22 via an AD converter 27. The input port 25 is also connected to a crank angle sensor 28, which generates a pulse whenever the crankshaft turns by, for example, 30 degrees. According to these pulses, the CPU 24 calculates the engine speed. The output port 26 is connected to the vacuum control valve 12 via a drive circuit 29.

The vacuum control valve 12 is controlled in accordance with an output value OUTPUT output from the ECU 20. In this embodiment, the output value OUTPUT is calculated using the following equation:

$$OUTPUT = KTGT + KFB + KFF$$

where

KTGT:    basic output value
KFB:    feedback correction coefficient
KFF:    feedforward correction coefficient

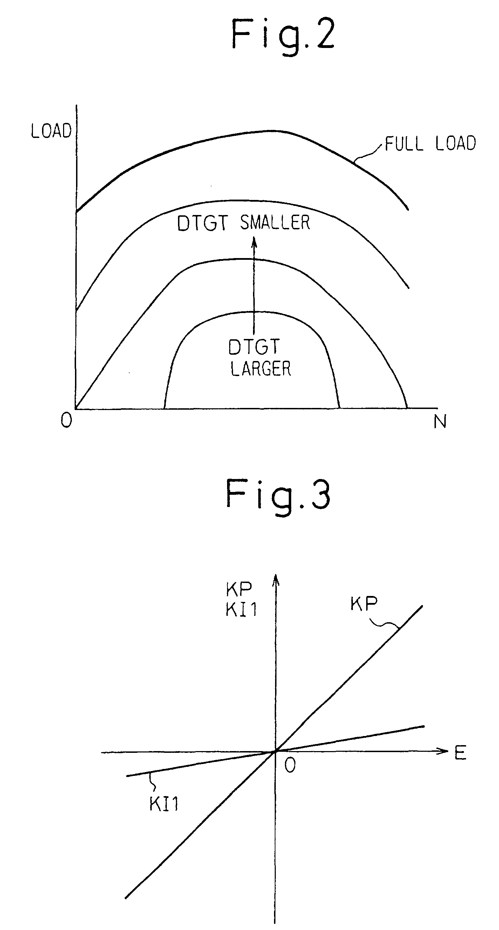

KTGT represents an output value corresponding to a target opening DTGT of the EGR gas control valve 6. Namely, under a stable condition with KFB = 0 and KFF = 0, when the vacuum control valve 12 receives the output value KTGT, the actual opening of the EGR gas control valve 6 is made equal to the target opening DTGT. The target opening DTGT is an opening required for supplying a suitable amount of the EGR gas to the engine which is defined in accordance with the engine operating condition, and is obtained in advance by experiment. When an actual opening DACT of the EGR gas control valve 6 is made equal to the target opening DTGT and thereby the suitable amount of the EGR gas is supplied to the engine, the engine emission performance is enhanced. The target opening DTGT is stored in the ROM 22, in advance, as a function of the engine speed N and the engine load, as shown in Fig. 2. The curves in Fig. 2 indicate identical values of the target opening DTGT. As can be seen from Fig. 2, the target opening DTGT becomes smaller when the engine load becomes larger, with the constant engine speed N.

As mentioned above, the vacuum control valve 12 is controlled in accordance with the duty ratio, and the coefficients OUTPUT, KTGT, KFB, and KFF represent the duty ratios, respectively. Further, in this embodiment, the target opening DTGT is obtained in accordance with the engine operating condition, and the basic output value KTGT is obtained in accordance with the target opening DTGT. Alternatively, the target opening DTGT may be stored in advance in the form of a duty ratio. Note that the target opening DTGT is zero when the supply of the EGR gas is to be stopped. When the output value OUTPUT is made zero or a negative value, the atmospheric pressure is led into the vacuum chamber 9, and thereby the EGR gas control valve 6 is closed.

KFB is a feedback correction coefficient to make the actual opening DACT of the EGR gas control valve 6 equal to the target opening DTGT, based on the difference between the actual opening DACT and the target opening. The feedback correction coefficient KFB is formed by a plurality of correction terms. In this embodiment, the feedback correction coefficient KFB is represented as a sum of a proportional term KP and a integral term KI, as follows:

$$KFB = KP + KI$$

The proportional term KP is calculated as a function of a difference E between the target opening DTGT and the actual opening DACT detected by the opening sensor 18, that is, DTGT - DACT, as shown in Fig. 3, and becomes larger as the difference E becomes larger.

The integral term KI is renewed with a renewal value KI1 one after another, as shown in the following equation:

$$KI = KI + KI1$$

The renewal value KI1 becomes larger as the difference E becomes larger, as shown in Fig. 3. The renewal value KI1 is much smaller than the proportional term KP, and thus the integral term KI fluctuates gradually with respect to the proportional term KP. Note that the proportional term KP and the renewal value KI1 are both made zero when the difference E is zero, and are stored in the ROM 22, in advance, in the form of a map as shown in Fig. 3.

When the target opening DTGT increases and thereby the difference E increases, the proportional and the integral terms KP and KI increase, to thereby increase the output value OUTPUT. This results in making the difference E smaller. When the difference E becomes smaller, the proportional term KP also becomes smaller, but the integral term KI is relatively large at this time. The integral term KI makes the difference E smaller. When the absolute value of the difference |E| becomes smaller than a very small constant z, the renewal of the proportional and the integral terms KP and KI is stopped.

KFF is a feedforward correction coefficient to make the actual opening DACT equal to the target opening DTGT, based on a change rate DLTA of the target opening DTGT. The feedforward correction coefficient KFF is calculated using the following equation:

KFF = DLTA • KD • K1

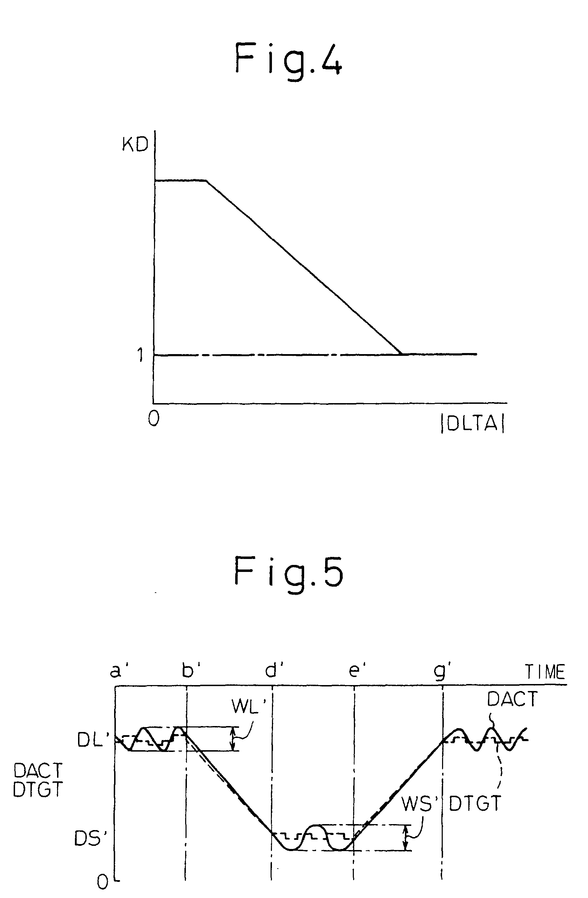

where KD is a coefficient to assure a good response of the actual opening DACT of the EGR gas control valve 6 just after the target opening DTGT changes. The coefficient KD is calculated based on the change rate DLTA of the target opening DTGT. The coefficient KD is kept 1 when the absolute value of the change rate |DLTA| is larger, and becomes larger when the absolute value of the change rate |DLTA| becomes smaller, as shown in Fig. 4. This coefficient KD is stored, in advance, in the ROM 22 in the form of the map as shown in Fig. 4.

Further, KI represents a constant larger than zero. As can be seen from the equation, the engine operating condition becomes stable and thereby the change rate DLTA becomes zero, the feedforward correction coefficient KFF becomes zero.

When the target opening DTGT, for example, increases and thereby the difference E increases, the change rate DLTA becomes positive (DLTA > 0) and thereby the feedforward correction coefficient KFF becomes positive (KFF > 0). This results in increasing the output value OUTPUT. Accordingly, the difference E is made smaller. In this condition, the coefficient KD is quickly made larger when the target opening DTGT changes slightly. Thus, just after the target opening DTGT changes, the coefficient KD quickly makes the feedforward correction coefficient KFF larger and thereby quickly makes the difference E smaller.

As mentioned above, the engine operating condition actually fluctuates, more or less, even though it is determined in a substantially stable condition. Thus, the target opening DTGT, which is determined in accordance with the engine operating condition, also fluctuates. In this condition, the amplitude of the target opening DTGT is relatively small. On the other hand, the feedforward correction coefficient KFF changes drastically when the target opening DTGT changes slightly, to thereby reduce the difference E just after the target opening DTGT changes. As a result, if the feedforward correction control is carried out when the target opening DTGT changes, the amplitude of the actual opening DACT undesirably becomes larger than that of the target opening DTGT. Next, the behaviors of the actual and the target openings DACT and DTGT when the feedforward correction control is continuously performed will be explained with reference to Fig. 5.

Fig. 5 shows a time chart for illustrating the actual and the target openings DACT and DTGT when the feedforward correction control is performed over the entire engine operating condition. From the time a' to the time b', the engine operating condition is substantially stable, and the target opening DTGT fluctuates around DL', which is a relatively larger opening, with a relatively smaller amplitude. Contrarily, the actual opening DACT fluctuates with an amplitude WL' larger than that of the target opening DTGT. Next, at the time b', the target opening DTGT drastically decreases. The actual opening DACT sufficiently follows the change in the target opening DTGT, due to the correction control and, particularly, due to the feedforward correction control. Namely, the deviation of the actual opening DACT from the target opening DTGT is prevented from being larger just after the target opening DTGT changes drastically.

Next, at the time d', the target opening DTGT becomes a relatively smaller opening DS', and fluctuates around DS' with a relatively smaller amplitude, until the time e'. From the time d' to the time e', the fluctuation of the target opening DTGT causes a fluctuation of the actual opening DACT, and the amplitude WS' of the actual opening DACT in this condition is substantially equal to the amplitude WL'.

Next, at the time e', the target opening DTGT drastically increases. In this condition, a good response of the actual opening DACT is also assured by the feedforward correction control, to thereby prevent the larger deviation of the actual opening DACT from the target opening. Next, at the time g', the target opening DTGT fluctuates around DL', again, and the actual opening DACT fluctuates with the amplitude WL'.

The target opening DTGT is an opening required for supplying the suitable amount of the EGR gas for the engine, determined in accordance with the engine operating condition, as mentioned above. Thus, if the actual opening DACT fluctuates and thereby deviates from the target opening DTGT, the supplied amount of the EGR gas deviates from the suitable amount and thereby the enhancement of the engine emission performance by the EGR gas deteriorates. When the target opening DTGT fluctuates around DL', which is relatively larger, the ratio of the amplitude WL' to the target opening DTGT is relatively small. Namely, the ratio of the deviation of the actual opening DACT from the target opening DTGT to the target opening DTGT is relatively small. Thus, in this condition, the enhancement of the engine emission performance by the EGR gas is little deteriorated, even though the actual opening DACT deviates from the target opening DTGT. In other words, the deviation hardly affects the enhancement of the engine emission performance, as long as the target opening DTGT is relatively large.

However, if the target opening DTGT fluctuates around DS' which is relatively small, the ratio of the amplitude WS' to the target opening DTGT is large, and thereby the deviation affects the enhancement of the engine emission performance considerably. When the engine 1 is a diesel engine as in Fig. 1, if the enhancement of the engine emission performance deteriorates, a large amount of particulates is exhausted into the exhaust passage 4.

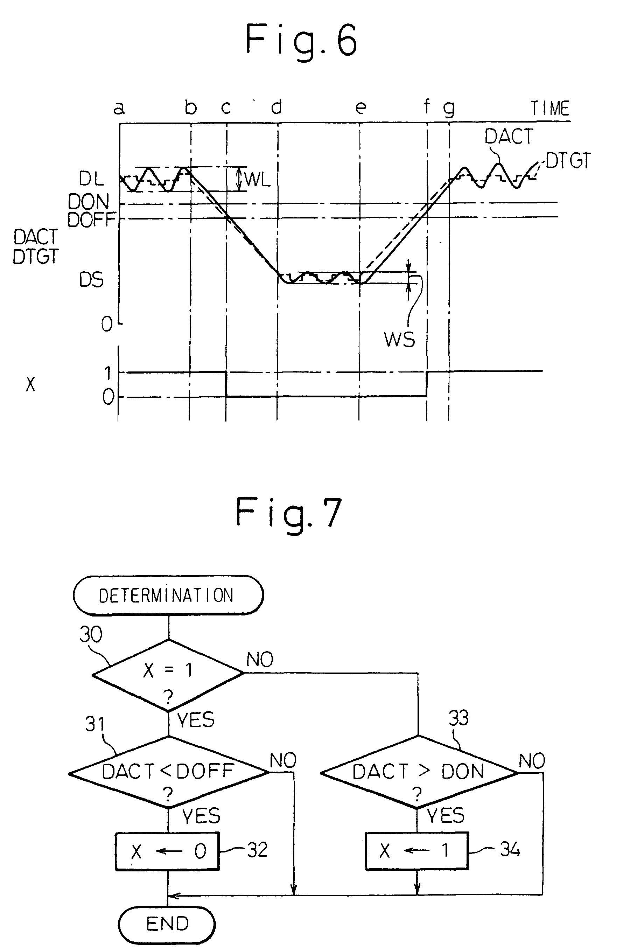

The reason why the actual opening DACT fluctuates with the amplitude WS', which is substantially equal to WL', when the target opening DTGT is relatively smaller is that the feedforward correction control is performed. Therefore, in this embodiment, the feedforward correction control is stopped when the target opening DTGT is relatively small, to thereby prevent the deterioration of the enhancement of the engine emission performance by the EGR gas. Next, the behaviors of the actual and the target openings DACT and DTGT according to this embodiment will be explained, with reference to Fig. 6.

Fig. 6 shows a time chart for illustrating the actual and the target openings DACT and DTGT according to this embodiment. In Fig. 6, X represents a factor which is made 1 when the feedforward correction control is to be performed, and is made zero when the feedforward correction control is to be stopped.

Referring to Fig. 6, from the time a to the time b, the engine operating condition is substantially stable, and the target opening DTGT fluctuates around DL, which is a relatively larger opening, with a relatively smaller amplitude. At this time, the factor X is made 1 and the feedforward correction control is performed, and therefore, the actual opening DACT fluctuates with an amplitude WL larger than that of the target opening DTGT. Next, at the time b, the target opening DTGT drastically decreases. The actual opening DACT sufficiently follows the change in the target opening DTGT, due to the correction control, particularly, due to the feedforward correction control.

Next, at the time c, the target opening DTGT decreases below a predetermined opening DOFF. If the feedforward correction control is performed when DTGT < DOFF, the enhancement by the EGR gas deteriorates, as explained with reference to Fig. 5. Therefore, in this embodiment, the factor X is made zero and the feedforward correction control is stopped, when DTGT < DOFF. Next, at the time d, the target opening DTGT fluctuates around a relatively smaller opening DS and the actual opening DACT also fluctuates. In this condition, the feedforward correction control is stopped, and thereby the actual opening DACT fluctuates with an amplitude WS smaller than WL. When the amplitude of the actual opening DACT becomes smaller and thereby the deviation of the actual opening DACT from the target opening DTGT becomes smaller, the ratio of the deviation to the target opening DTGT becomes smaller. This makes the influence of the deviation on the enhancement by the EGR gas smaller. Thus, a good enhancement of the engine emission performance by the EGR gas is assured, even when the target opening DTGT is small. This prevents a large amount of particulates being exhausted into the exhaust passage 4, when the engine 1 is a diesel engine.

Next, at the time e, the target opening DTGT starts to increase drastically, and increases over a predetermined opening DON at the time f. When the target opening DTGT is larger than DON, the feedforward correction control little deteriorates the enhancement of the engine emission performance by the EGR gas. Therefore, the factor X is made 1 and the feedforward correction control is resumed, when DTGT > DON. Next, at the time g, the target opening DTGT fluctuates around DL, again, and the actual opening DACT fluctuates with the amplitude WL. In this condition, the enhancement of the engine emission performance by the EGR gas is assured, even though the feedforward correction control is performed, as mentioned above.

The predetermined opening DOFF is used to make the factor X zero when the target opening DTGT decreases below DOFF, to thereby stop the feedforward correction control, and the predetermined opening DON is for making the factor X 1 when the target opening DTGT increases over DON, to thereby perform the feedforward correction control. Although these openings DON and DOFF may be determined to be any openings, DON and DOFF are determined so that DON > DOFF.

If the feedforward correction control is stopped when the amount of the EGR gas supplied to the engine is to be reduced, as between the time b and the time c in Fig. 6, the response of the actual opening DACT deteriorates. This may lead to a delay in the reduction of the supplied amount of the EGR gas, and deteriorates the enhancement of the engine emission performance by the EGR gas. Therefore, in this embodiment, the opening DOFF is made as small as possible, to thereby broaden the engine operating condition range in which the feedforward correction control is performed when the actual opening DACT is to be decreased.

If the feedforward correction control is stopped when the amount of the EGR gas supplied to the engine is to be increased, as between the time e and the time g in Fig. 6, a delay in the increase of the supplied amount of the EGR gas may occur. However, the delay in the increase of the supplied amount of the EGR gas hardly influences the enhancement of the engine emission performance by the EGR gas. Rather, the engine emission performance by the EGR gas is more enhanced by continuously stopping the feedforward correction control to thereby keep the amplitude of the actual opening DACT smaller, after the target opening DTGT once becomes smaller than DOFF and thereby the feedforward correction control is once stopped. Therefore, in this embodiment, the opening DON is made as large as possible, to thereby broaden the engine operating condition range in which the feedforward correction control is continuously stopped after the feedforward correction control is once stopped.

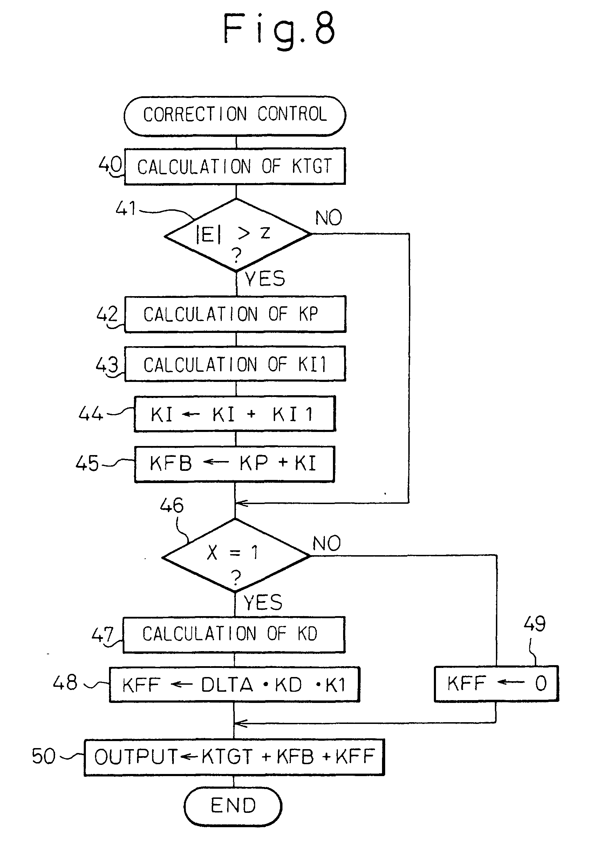

Next, the routines for executing the abovementioned embodiment will be explained, with reference to Figs. 7 and 8.

Fig. 7 illustrates a routine for determining whether the feedforward correction control is to be performed. This routine is executed by interruption every predetermined time.

Referring to Fig. 7, first, in step 30, it is determined whether the factor x is made 1. The factor X has been made 1 when the feedforward correction control is to be started. Thus, the routine goes from step 30 to step 31 just after the feedforward correction control starts. In step 31, it is determined whether the target opening DTGT is smaller than the predetermined opening DOFF. If DTGT < DOFF, it is judged that the feedforward correction control deteriorates the enhancement of the engine emission performance, and thus the routine goes to step 32, where the factor X is made zero. Then, the processing cycle is ended. Contrarily, if DTGT ≥ DOFF in step 31, it is judged that the feedforward correction control does not deteriorate the enhancement of the engine emission performance, and thus the processing cycle is ended, while the factor X is kept 1.

When the factor X is made zero in step 32, in the following processing cycle, the routine goes from step 30 to step 33, where it is determined whether the actual opening DACT is larger than the predetermined opening DON. If DTGT > DON, it is judged that the feedforward correction control does not deteriorate the enhancement of the engine emission performance, and thus the routine goes to step 34, where the factor X is made 1. Then, the processing cycle is ended. Contrarily, if DTGT < DON in step 33, it is judged that the feedforward correction control deteriorates the enhancement of the engine emission performance, and thus the processing cycle is ended, while the factor X is kept zero.

Fig. 8 illustrates a routine for executing a correction control of the opening of the EGR gas control valve 6. This routine is executed by interruption every predetermined time.

Referring to Fig. 8, first, in step 40, the basic output value KTGT is calculated, in accordance with the target opening DTGT calculated using the map shown in Fig. 2. In following step 41, it is determined whether the absolute value |E| of the difference DTGT - DACT is larger than the small constant z. If |E| > z, the routine goes to step 42. Steps 42 to 45 are for performing the feedback correction control. In step 42, the proportional term KP is calculated using the map shown in Fig. 3. In following step 43, the renewal value KI1 of the integral term KI is calculated using the map shown in Fig. 3. In following step 44, the integral term KI is calculated using the following equation:

$$KI = KI + KI1$$

Note that the integral term KI has been made zero when the feedback correction control starts. Then, the routine goes to step 45, where the feedback correction coefficient KFB is calculated using the following equation:

$$KFB = KP + KI$$

Then, the routine goes to step 46. Contrarily, if |E| ≤ z in step 41, the routine jumps to step 46. Namely, if |E| ≤ z, the renewing of the feedback correction coefficient KFB is stopped.

In step 46, it is determined whether the factor X, which is made either zero or 1 in the routine shown in Fig. 7, is made 1. If X = 1, the routine goes to step 47, where the coefficient KD is calculated using the map shown in Fig. 4. In following step 48, the feedforward correction coefficient KFF is calculated using the following equation:

$$KFF = DLTA \cdot KD \cdot K1$$

Namely, the feedforward correction control is performed when X = 1. Contrarily, if X = 0 in step 46, the routine goes to step 49, where the feedforward correction coefficient KFF is made zero. Namely, the feedforward correction control is stopped when X = 0.

In following step 50, the output value OUTPUT is calculated using the following equation:

$$OUTPUT = KTGT + KFB + KFF$$

The vacuum control valve 12 is driven in accordance with the output value OUTPUT in the form of the duty ratio. This results in introducing a negative or atmospheric pressure into the vacuum chamber 9 of the EGR gas control valve 6, to thereby drive the EGR gas control valve 6.

Next, another embodiment for calculating the feedforward correction coefficient KFF will be explained.

In this embodiment, the feedforward correction coefficient KFF is calculated using the following equation:

$$KFF = DLTA \cdot KD1 \cdot KD2 \cdot KD3 \cdot KD4$$

where KD1 is a coefficient for assuring a good response of the actual opening DACT just after the target opening DTGT changes, and is identical to the coefficient KD as explained above with reference to Fig. 4. Namely, the coefficient KD becomes larger when the absolute value of the change rate |DLTA| of the target opening DTGT.

KD2 is a coefficient determined on the basis of coefficients KD21 and KD22, which are determined in accordance with the target opening DTGT and with the difference E, respectively, using the following equation:

$$KD2 = KD21 \cdot KD22$$

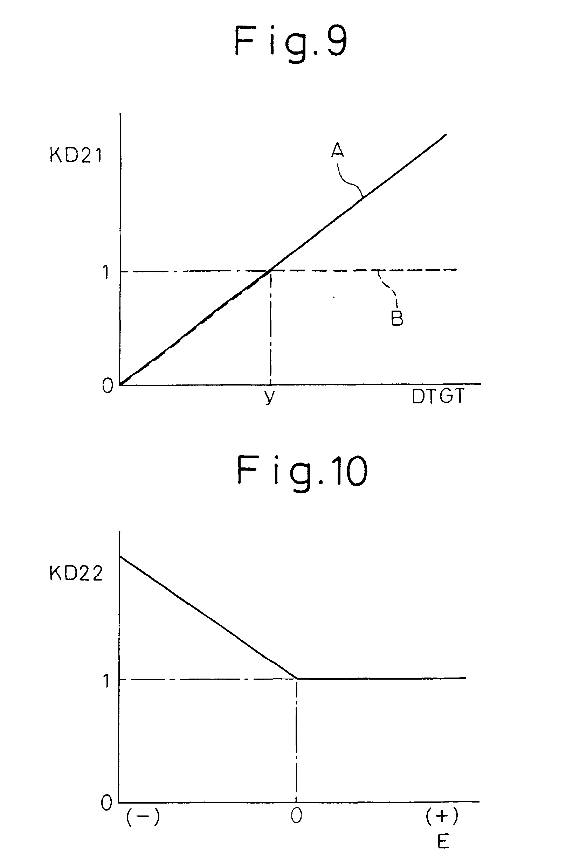

where KD21 is a coefficient for reducing the feedforward correction control when the target opening DTGT is small. The coefficient KD21 becomes smaller when the target opening DTGT becomes smaller, and is made 1 when the target opening DTGT is a constant value y, as shown in Fig. 9 by a solid line A. As mentioned above, when the target opening DTGT is relatively small, the feedforward correction control makes the amplitude of the actual opening DACT larger and reduces the enhancement of the engine emission performance due to the EGR gas. The enhancement deteriorates more when the target opening DTGT becomes smaller. Therefore, in this embodiment, the coefficient KD21 is determined to become smaller when the target opening DTGT becomes smaller. Further, if the target opening DTGT is smaller than the constant y, the engine emission performance deteriorates below the admissable range. Therefore, KD21 is made smaller than 1 when the target opening DTGT is smaller than the constant y. As a result, the feedforward correction control is reduced more when the target opening DTGT becomes smaller. Alternatively, the coefficient KD21 may be determined as shown in Fig. 9 by a broken line B. Namely, KD21 may become smaller as the target opening DTGT becomes smaller when DTGT < y, and may be kept 1 when DTGT $\geq$ y.

On the other hand, KD22 is a coefficient for reducing of the reduction of the feedforward correction control due to the coefficient KD21 when, in particular, the target opening DTGT decreases and the response of the actual opening DACT deteriorates, to thereby enhance the response of the actual opening DACT. The coefficient KD22 becomes larger as the difference E becomes smaller when the difference E is negative (E < 0), and is kept 1 when E > 1, as shown in Fig. 10. When the target opening DTGT decreases and thereby the actual opening DACT decreases, if the reduction of the supplied amount of the EGR gas is delayed to thereby supply the EGR gas excessively to the engine, the engine emission performance deteriorates, as mentioned above. Therefore, KD22, which is larger than 1 when the actual opening DACT is larger than the target opening DTGT, is introduced to reduce the reduction of the feedforward correction control due to the coefficient KD21. As a result, the feedforward correction control is enhanced when the response of the actual opening DACT deteriorates and thereby the deviation of the actual opening DACT becomes larger, to thereby make the deviation of the actual opening DACT smaller.

KD3 and KD4 are coefficients calculated in accordance with the absolute value of the difference |E|.

First, the coefficient KD3 is for reducing the feedforward correction control when the actual opening DACT increases or decreases across the target opening DTGT, that is, the actual opening DACT overshoots or undershoots. The coefficient KD3 is kept 1 when the actual opening DACT does not overshoot or undershoot.

If the target opening DTGT, for example, decreases when the feedforward correction control is performed, the actual opening DACT is controlled to decrease toward the target opening DTGT, and then decreases below the target opening DTGT. When such an undershoot occurs, the actual opening DACT is corrected to increase toward the target opening DTGT, but overshoots the target opening DTGT. Accordingly, the actual opening DACT fluctuates undesirably, even if the target opening DTGT does not fluctuate.

Therefore, using the coefficient KD3 smaller than 1, the feedforward correction control is reduced when the actual opening DACT overshoots or undershoots relative to the target opening DTGT, to thereby suppress the fluctuation of the actual opening DACT. In this embodiment, the coefficient KD3 is made 1 when |E| = 0, becomes smaller as |E| becomes larger, and is made zero when |E| $\geq$ z. Therefore, when the actual opening DACT overshoots or undershoots, if |E| is smaller than a very small constant z, the feedforward correction control is reduced more as |E| becomes larger, and if |E| is larger than the constant z, the feedforward correction coefficient KFF is made zero and thereby the feedforward correction control is stopped. This reduces the fluctuation of the actual opening DACT. Alternatively, the coefficient KD3 may be kept zero regardless the absolute value |E|, when the actual opening DACT overshoots or undershoots.

Note that, in this embodiment, it is judged that the actual opening DACT overshoots or undershoots, when the target opening DTGT is increasing and the actual opening DACT is larger than the target opening DTGT, or when the target opening DTGT is decreasing and the actual opening DACT is smaller than the target opening DTGT.

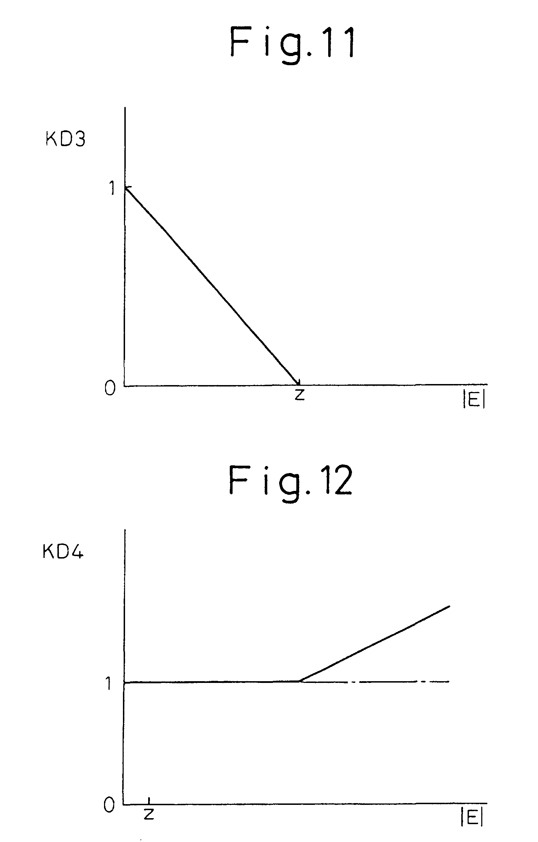

Further, KD4 is a coefficient for enhancing the feedforward correction control when the feedforward correction control is performed and the response of the actual opening DACT deteriorates. When the target opening DTGT is, for example, relatively small, the coefficient KD21 is smaller than 1 to thereby reduce the feedforward correction control. However, the reduction of the feedforward correction control undesirably deteriorates the response of the actual opening DACT. On the other hand, a period T, during which the absolute value of the difference |E| is continuously larger than the constant z, becomes longer, as the response of the actual opening DACT more deteriorates. Therefore, first, the period T is detected, and when the period T is longer than a predetermined period T1, the coefficient KD4 is made larger than 1 to thereby enhance the feedforward correction control. This results in assuring the response of the actual opening DACT. The coefficient KD4 becomes larger when the absolute value |E| becomes larger, as shown in Fig. 12. Further, KD4 is kept 1 when T < T1 or when |E| < z. Note that the coefficients KD1, KD21, KD22, KD3, and KD4 are stored in the ROM 22, in advance, in the form of the map shown in Figs. 4, 9, 10, 11, and 12, respectively.

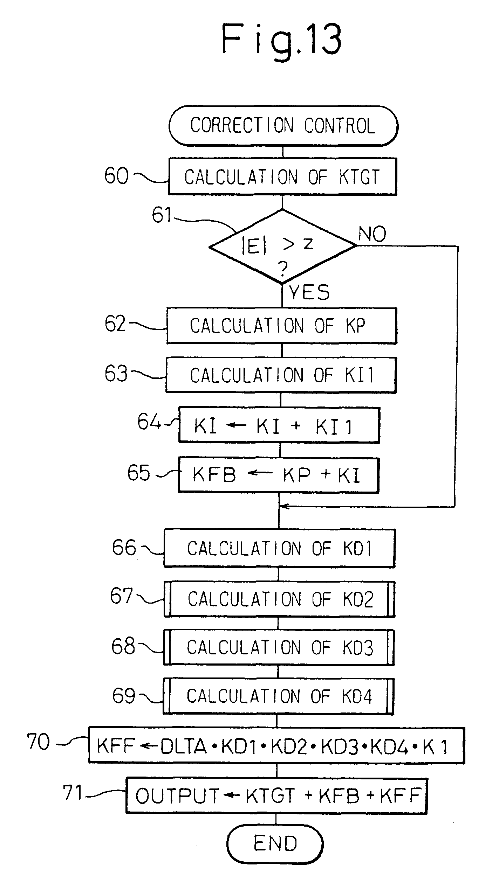

Fig. 13 illustrates a routine for executing a correction control of the opening of the EGR gas control valve 6, according to this embodiment. This routine is executed by interruption every predetermined time.

Referring to Fig. 13, first, in step 60, the basic output value KTGT is calculated, in accordance with the target opening DTGT calculated using the map shown in Fig. 2. In the following step 61, it is determined whether the absolute value |E| of the difference DTGT - DACT is larger than the small constant z. If |E| > z, the routine goes to step 62, and if |E| ≤ z, the routine jumps to step 66. In step 62, the proportional term KP is calculated using the map shown in Fig. 3. In the following step 63, the renewal value KI1 of the integral term KI is calculated using the map shown in Fig. 3. In the following step 64, the integral term KI is calculated using the following equation:

$$KI = KI + KI1$$

Note that the integral term KI has been made zero when the feedback correction control starts. Then, the routine goes to step 64, where the feedback correction coefficient KFB is calculated using the following equation:

$$KFB = KP + KI$$

Then, the routine goes to step 66.

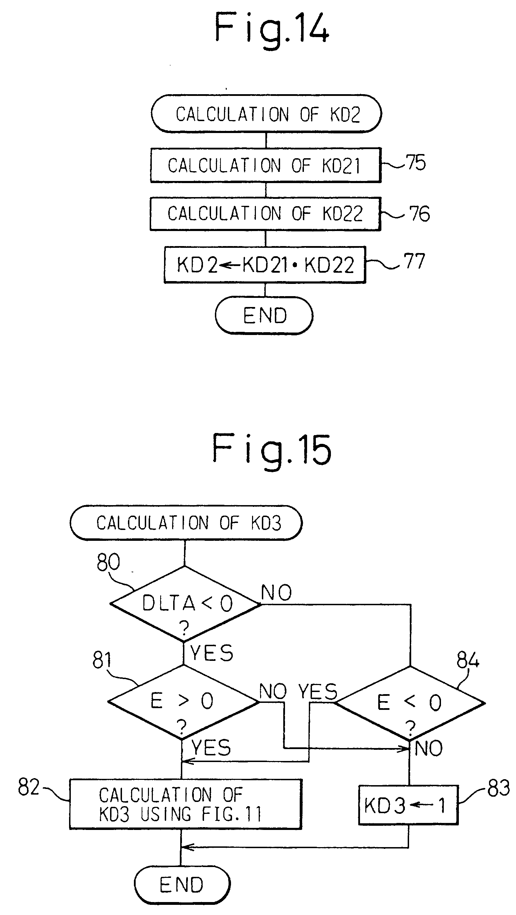

In step 66, the coefficient KD1 is calculated using the map shown in Fig. 4, because KD1 is identical to KD in Fig. 4. In following steps 67, 68, and 69, the coefficient KD2, KD3, and KD4 are calculated by executing the routines shown in Figs. 14 to 16, respectively (explained hereinafter). In the following step 70, the feedforward correction coefficient KFF is calculated using the following equation:

$$KFF = DLTA \cdot KD1 \cdot KD2 \cdot KD3 \cdot KD4$$

In following step 71, the output value OUTPUT is calculated using the following equation:

$$OUTPUT = KTGT + KFB + KFF$$

The vacuum control valve 12 is driven in accordance with the output value OUTPUT in the form of the duty ratio.

Next, the routine for calculating the coefficient KD2, executed in step 67 in Fig. 13, will be explained with reference to Fig. 14.

Referring to Fig. 14, first, in step 75, the coefficient KD21 is calculated using the map shown in Fig. 9. In the following step 76, the coefficient KD22 is calculated using the map shown in Fig. 10. In the following step 77, the coefficient KD2 is calculated using the following equation:

$$KD2 = KD21 \cdot KD22$$

Then, the processing cycle is ended.

Next, the routine for calculating the coefficient KD3, executed in step 68 in Fig. 13, will be explained with reference to Fig. 15.

Referring to Fig. 15, first, in step 80, it is determined whether the change rate of the target opening DLTA is smaller than zero, namely, whether the target opening DTGT is decreasing. If DLTA < 0, the routine goes to step 81, where it is determined whether the difference E is larger than zero, namely, whether the actual opening is smaller than the target opening DTGT. If E > 0, namely, if DLTA < 0 and DACT < DTGT, the actual opening DACT is judged to be undershooting, and the routine goes to step 82, where the coefficient KD3 is calculated using the map shown in Fig. 11. Then, the processing cycle is ended. Contrarily, if E ≤ 0 in step 81, namely, if DLTA < 0 and DACT ≥ DTGT, the actual opening DACT is not judged to be undershooting or overshooting, and the routine goes to step 83 where KD3 is made 1. Then, the processing cycle is ended.

If DLTA ≥ 0 in step 80, the routine goes to step 84. In step 84, it is determined whether the difference E is smaller than zero, namely, whether the actual opening is larger than the target opening DTGT. If E < 0, namely, if DLTA ≥ 0 and DACT > DTGT, the actual opening DACT is judged to be overshooting, and the routine goes to step 82, where the coefficient KD3 is calculated using the map shown in Fig. 11. Then, the processing cycle is ended. Contrarily, if E ≥ 0 in step 84, namely, if DLTA ≥ 0 and DACT ≤ DTGT, the actual opening DACT is not judged to be undershooting or overshooting, and the routine goes to step 83 where KD3 is made 1. Then, the processing cycle is ended.

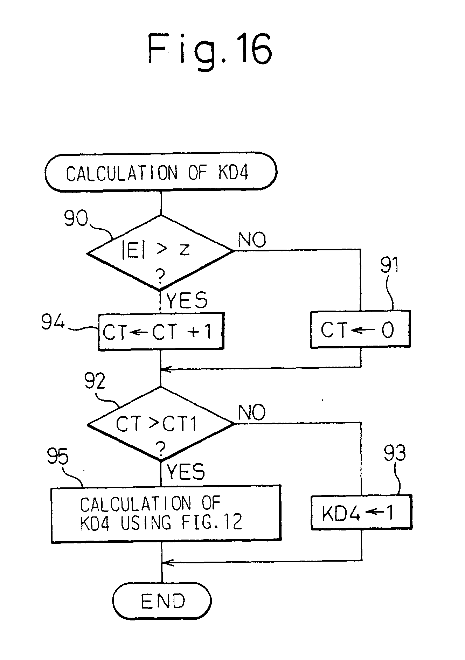

Next, the routine for calculating the coefficient KD4, executed in step 69 in Fig. 13, will be explained with reference to Fig. 16.

Referring to Fig. 16, first, in step 90, it is determined whether the absolute value of the difference |E| is larger than the constant z. If |E| ≤ z, namely, if |E| is very small, the routine goes to step 91, where a counter value CT, representing a period during which |E| is continuously larger than z and corresponding to the period T mentioned above, is reset. Then, the routine goes to step 92, where it is determined whether the counter value CT is larger than a predetermined value CT1, corresponding to the predetermined period T1. When CT is made zero in step 91, the counter value CT is smaller than CT1, and thus the routine goes to step 93. In step 93, the coefficient KD4 is made 1. Then, the processing cycle is ended.

Contrarily, if |E| > z in step 90, the routine goes step 94, where the counter value CT is incremented by 1. Then, the routine goes to step 92, and goes to step 93 if CT ≤ CT1. Namely, KD4 is kept 1 during CT ≤ CT1. If CT > CT1 in step 92, the routine goes to step 95. Namely, the routine goes to step 95 as long as |E| > z, after the counter value CT is once larger than CT1. In step 95, the coefficient KD4 is calculated using the map shown in Fig. 12. Then, the processing cycle is ended.

In the embodiment mentioned above, the EGR gas control valve 6 includes the vacuum chamber 9 to control the opening thereof. Alternatively, an actuator of electromagnetic type may be connected to the valve body 7 to control the opening.

According to the present invention, it is possible to provide an exhaust gas recirculation system able to assure the enhancement of the engine emission performance by the EGR gas, regardless the target opening of the EGR gas control valve.

**Claims**

1. An exhaust gas recirculation system for an engine having an intake passage and an exhaust passage, the system comprising:

    an EGR gas passage connecting the intake and the exhaust passages to each other;
    an EGR gas control valve arranged in the EGR gas passage for controlling an amount of the EGR gas flowing through the EGR gas passage;
    target opening calculating means for calculating a target opening of the EGR gas control valve in accordance with an engine operating condition;
    output value calculating means for calculating an output value corresponding to the target opening;
    opening detecting means for detecting an actual opening of the EGR gas control valve;
    feedback correcting means for correcting the output value calculated by the output value calculating means in accordance with output signals from the opening detecting means, using a feedback correction coefficient, to make the actual opening of the EGR gas control valve equal to the target opening;
    feedforward correcting means for correcting the output value calculated by the output value calculating means in accordance with a change rate of the target opening, using a feedforward correction coefficient, to make the actual opening of the EGR gas control valve equal to the target opening;
    feedforward correction control reducing means for reducing the feedforward correction control by the feedforward correcting means, the feedforward correction control reducing means reducing the feedforward correction control when the target opening becomes smaller; and
    opening changing means for changing the opening of the EGR gas control valve in accordance with the corrected output value.

2. A system according to claim 1, wherein the feedforward correction control reducing means stops the feedforward correction control when the target opening becomes smaller than a first threshold.

3. A system according to claim 2, wherein the feedforward correction control reducing means resumes the feedforward correction control when the target opening becomes larger than a second threshold.

4. A system according to claim 3, wherein the first threshold is smaller than the second threshold.

5. A system according to claim 1, wherein the feedforward correction control reducing means reduces the feedforward correction control as the target opening becomes smaller.

6. A system according to claim 1, wherein the system further comprises feedforward correction control enhancing means for enhancing the feedforward correction control, the feedforward correction enhancing means enhancing the feedforward correction control when the absolute value of the difference between the target and the actual openings becomes larger.

7. A system according to claim 1, wherein the system further comprises reduction reducing means for reducing the reduction of the feedforward correction control by the feedforward correction reducing means, the reduction reducing means reducing the reduction of the feedforward correction control when the difference (DTGT-DTCT) between the target opening (DTGT) and the actual opening (DACT) becomes smaller.

8. A system according to claim 1, wherein the system further comprises determining means for determining whether the actual opening overshoots or undershoots relative to the target opening, and additional feedforward correction control reducing means for reducing the feedforward correction control when the determining means determines that the actual opening overshoots or undershoots relative to the target opening, the additional feedforward correction control reducing means reducing the feedforward correction control when the overshoot or the undershoot of the actual opening becomes larger.

9. A system according to claim 8, wherein the additional feedforward correction control reducing means stops the feedforward correction control when the determining means determines that the actual opening overshoots or undershoots relative to the target opening and the overshoot or the undershoot of the actual opening is larger than a predetermined value.

10. A system according to claim 1, wherein the renewing of the feedback correction coefficient is stopped when the difference between the actual and the target openings is smaller than a predetermined value.

11. A system according to claim 1, wherein the target opening becomes smaller when the engine load becomes higher.

12. A system according to claim 1, wherein the engine is a diesel engine.

13. A system according to claim 1, wherein the EGR gas control valve comprises a vacuum chamber, to which a negative pressure can be introduced, the opening of the EGR gas control valve becoming larger as the negative pressure in the vacuum chamber becomes larger, and a vacuum control valve connected to the vacuum chamber, and wherein the vacuum control valve selectively connects the vacuum chamber to a vacuum source or the atmosphere to selectively introduce the negative pressure or the atmospheric pressure in the vacuum chamber.

**Patentansprüche**

1. Abgasrückführungssystem für einen Motor mit einem Ansaugkanal und einem Ausströmkanal, wobei das System aufweist:

  einen AGR-Gaskanal, welcher den Ansaugkanal und den Ausströmkanal miteinander verbindet;

  ein AGR-Gassteuerventil, welches in dem AGR-Gaskanal angeordnet ist, zum Steuern einer Menge des AGR-Gases, welches durch den AGR-Gaskanal strömt;

  eine Sollöffnungsberechnungseinheit zum Berechnen einer Sollöffnung des AGR-Gassteuerventils in Übereinstimmung mit einer Motorbetriebsbedingung;

  eine Ausgangswertberechnungseinrichtung zum Berechnen eines Ausgangswerts, welcher der Sollöffnung entspricht;

  eine Öffnungserfassungseinrichtung zum Erfassen einer tatsächlichen Öffnung des AGR-Gassteuerventils;

  eine Rückführungskorrektureinrichtung zum Korrigieren des durch die Ausgangswertberechnungseinheit berechneten Ausgangswerts in Übereinstimmung mit Ausgangssignalen von der Öffnungserfassungseinrichtung unter Verwendung eines Rückführungskorrekturkoeffizienten, um die tatsächliche Öffnung des AGR-Gassteuerventils gleich der Sollöffnung zu machen;

  eine Aufschaltungskorrektureinrichtung zum Korrigieren des durch die Ausgangswertberechnungseinheit berechneten Ausgangswerts in Übereinstimmung mit einer Änderungsrate der Sollöffnung unter Verwendung eines Aufschaltungskorrekturkoeffizienten, um die tatsächliche Öffnung des AGR-Gassteuerventils gleich der Sollöffnung zu machen;

  eine Aufschaltungskorrektursteuerungsreduziereinrichtung zum Reduzieren der Aufschaltungskorrektursteuerung durch die Aufschaltungskorrektureinrichtung, wobei die Aufschaltungskorrektursteuerungsreduziereinrichtung die Aufschaltungskorrektursteuerung reduziert, wenn die Sollöffnung kleiner wird; und

  eine Öffnungsänderungseinrichtung zum Ändern der Öffnung des AGR-Gassteuerventils in Übereinstimmung mit dem korrigierten Ausgangswert.

2. System gemäß Anspruch 1, wobei die Aufschaltungskorrektursteuerungsreduziereinrichtung die Aufschaltungskorrektursteuerung anhält, wenn die Sollöffnung kleiner als ein erster Schwellwert wird.

3. System gemäß Anspruch 2, wobei die Aufschaltungskorrektursteuerungsreduziereinrichtung die Aufschaltungskorrektursteuerung fortsetzt, wenn die Sollöffnung größer als ein zweiter Schwellwert wird.

4. System gemäß Anspruch 3, wobei der erste Schwellwert kleiner als der zweite Schwellwert ist.

5. System gemäß Anspruch 1, wobei die Aufschaltungskorrektursteuerungsreduziereinrichtung die Aufschaltungskorrektursteuerung reduziert, wenn die Sollöffnung kleiner wird.

6. System gemäß Anspruch 1, wobei das System weiter eine Aufschaltungskorrekturverstärkungseinrichtung zum Verstärken der Aufschaltungskorrektursteuerung aufweist, wobei die Aufschaltungskorrekturverstärkungseinrichtung die Aufschaltungskorrektursteuerung verstärkt, wenn der Absolutwert der Differenz zwischen der Soll- und der tatsächlichen Öffnung größer wird.

7. System gemäß Anspruch 1, wobei das System weiter eine Reduktionsreduziereinrichtung zum Reduzieren der Reduktion der Aufschaltungskorrektursteuerung durch die Aufschaltungskorrekturreduziereinrichtung aufweist, wobei die Reduktionsreduziereinrichtung die Reduktion der Aufschaltungskorrektursteuerung reduziert, wenn die Differenz (DTGT-DTCT) zwischen der Sollöffnung (DTGT) und der tatsächlichen Öffnung (DACT) kleiner wird.

8. System gemäß Anspruch 1, wobei das System weiter eine Bestimmungseinrichtung zum Bestimmen, ob die tatsächliche Öffnung relativ zu der Sollöffnung überschwingt oder unterschwingt, und eine zusätzliche Aufschaltungskorrektursteuerungsreduziereinrichtung zum Reduzieren der Aufschaltungskorrektursteuerung, wenn die Bestimmungseinrichtung bestimmt, daß die tatsächliche Öffnung relativ zu der Sollöffnung überschwingt oder unterschwingt, aufweist, wobei die zusätzliche Aufschaltungskorrektursteuerungsreduziereinrichtung die Aufschaltungskorrektursteuerung reduziert, wenn das Überschwingen oder das Unterschwingen der tatsächlichen Öffnung größer wird.

9. System gemäß Anspruch 1, wobei die zusätzliche Aufschaltungskorrektursteuerungsreduziereinrichtung die Aufschaltungskorrektursteuerung anhält, wenn die Bestimmungseinrichtung bestimmt, daß die tatsächliche Öffnung relativ zu der Sollöffnung überschwingt oder unterschwingt und das Überschwingen oder das Unterschwingen der tatsächlichen Öffnung größer als ein vorbestimmter Wert ist.

10. System gemäß Anspruch 1, wobei das Erneuern des Rückführungskorrekturkoeffizienten angehalten wird, wenn die Differenz zwischen der tatsächlichen und der Sollöffnung kleiner als ein vorbestimmter Wert ist.

11. System gemäß Anspruch 1, wobei die Sollöffnung kleiner wird, wenn die Motorlast höher wird.

12. System gemäß Anspruch 1, wobei der Motor ein Dieselmotor ist.

13. System gemäß Anspruch 1, wobei das AGR-Gassteuerventil eine Vakuumkammer, in welche ein negativer Druck eingeführt werden kann, wobei die Öffnung des AGR-Gassteuerventils größer wird, wenn der negative Druck in der Vakuumkammer größer wird, und ein mit der Vakuumkammer verbundenes Vakuumsteuerventil aufweist, und wobei das Vakuumsteuerventil die Vakuumkammer wahlweise mit einer Vakuumquelle oder der Atmosphäre verbindet, um wahlweise den negativen Druck oder den Atmosphärendruck in die Vakuumkammer einzuführen.

**Revendications**

1. Système de recirculation des gaz d'échappement pour un moteur comportant un passage d'admission et un passage d'échappement, le système comprenant :

un passage des gaz EGR raccordant des passages d'admission et d'échappement l'un à l'autre ;

une soupape de commande des gaz EGR disposée dans le passage des gaz EGR pour commander une quantité des gaz EGR circulant à travers le passage des gaz EGR ;

un moyen de calcul d'ouverture cible pour calculer une ouverture cible de la soupape de commande des gaz EGR en conformité avec une condition de fonctionnement du moteur ;

un moyen de calcul de valeur de sortie pour calculer une valeur de sortie correspondant à l'ouverture cible;

un moyen de détection d'ouverture pour détecter une ouverture réelle de la soupape de commande des gaz EGR ;

un moyen de correction par contre-réaction pour corriger la valeur de sortie calculée par le moyen de calcul de la valeur de sortie en conformité avec des signaux de sortie provenant du moyen de détection d'ouverture, en utilisant un coefficient de correction par contre-réaction pour rendre l'ouverture réelle de la soupape de commande des gaz EGR égale à l'ouverture cible ;

un moyen de correction par action directe pour corriger la valeur de sortie calculée par le moyen de calcul de valeur de sortie en conformité avec une vitesse de changement de l'ouverture cible, en utilisant un coefficient de correction par action directe pour rendre l'ouverture réelle de la soupape de commande des gaz EGR égale à l'ouverture cible ;

un moyen de réduction de commande de correction par action directe pour réduire la commande de correction par action directe par le moyen de correction par action directe, le moyen de réduction de commande de correction par action directe réduisant la commande de correction par action directe lorsque l'ouverture cible devient plus petite ; et

un moyen de changement d'ouverture pour changer l'ouverture de la soupape de commande des gaz EGR en conformité avec la valeur de sortie corrigée.

2. Système selon la revendication 1, dans lequel le moyen de réduction de commande de correction par action directe arrête la commande de correction par action directe lorsque l'ouverture cible devient plus petite qu'un premier seuil.

3. Système selon la revendication 2, dans lequel le moyen de réduction de commande de correction par action directe reprend la commande de correction par action directe lorsque l'ouverture cible devient plus grande qu'un second seuil.

4. Système selon la revendication 3, dans lequel le premier seuil est plus petit que le second seuil.

5. Système selon la revendication 1, dans lequel le moyen de réduction de commande de correction par action directe réduit la commande de correction par action directe à mesure que l'ouverture cible devient plus petite.

6. Système selon la revendication 1, dans lequel le système comprend, en outre, un moyen d'augmentation de commande de correction par action directe pour augmenter la commande de correction par action directe, le moyen d'augmentation de correction par action directe augmentant la commande de correction par action directe lorsque la valeur absolue de la différence entre les ouvertures cible et réelle devient plus grande.

7. Système selon la revendication 1, dans lequel le système comprend, en outre, un moyen de réduction de réduction pour réduire la réduction de la commande de correction par action directe par le moyen de réduction de correction par action directe, le moyen de réduction de réduction réduisant la réduction de la commande de correction par action directe lorsque la différence (DTGT - DACT) entre l'ouverture cible (DTGT) et l'ouverture réelle (DACT) devient plus petite.

8. Système selon la revendication 1, dans lequel le système comprend, en outre, un moyen de détermination pour déterminer si l'ouverture réelle dépasse positivement ou dépasse négativement par rapport à l'ouverture cible et un moyen de réduction de commande de correction par action directe supplémentaire pour réduire la commande de correction par action directe lorsque le moyen de détermination détermine que l'ouverture réelle dépasse positivement ou dépasse négativement l'ouverture cible, le moyen de réduction de commande de correction par action directe supplémentaire réduisant la commande de correction par action directe lorsque le dépassement positif ou le dépassement négatif de l'ouverture réelle devient plus grand.

9. Système selon la revendication 8, dans lequel le moyen de réduction de commande de correction par action directe supplémentaire arrête la commande de correction par action directe lorsque le moyen de détermination détermine que l'ouverture réelle dépasse positivement ou dépasse négativement l'ouverture cible et que le dépassement positif ou le dépassement négatif de l'ouverture réelle est plus grand qu'une valeur prédéterminée.

10. Système selon la revendication 1, dans lequel le renouvellement du coefficient de correction par contre-réaction est arrêté lorsque la différence entre les ouvertures réelle et cible est plus petite qu'une valeur prédéterminée.

11. Système selon la revendication 1, dans lequel l'ouverture cible devient plus petite lorsque la charge du moteur devient plus élevée.

12. Système selon la revendication 1, dans lequel le moteur est un moteur diesel.

13. Système selon la revendication 1, dans lequel la soupape de commande des gaz EGR comprend une chambre de vide dans laquelle une pression négative peut être introduite, l'ouverture de la soupape de commande des gaz EGR devenant plus grande à mesure que la pression négative dans la chambre de vide devient plus grande et une soupape de commande de vide raccordée à la chambre de vide et dans laquelle la soupape de commande de vide connecte sélectivement la chambre de vide à une source de vide ou à la pression atmosphérique pour introduire sélectivement la pression négative ou la pression atmosphérique dans la chambre de vide.

# Fig.1

# Fig.2

# Fig.3

# Fig.4

# Fig.5

# Fig. 6

# Fig. 7

# Fig.8

CORRECTION CONTROL

40 CALCULATION OF KTGT

41 $|E| > z$ ? — NO

YES

42 CALCULATION OF KP

43 CALCULATION OF KI1

44 $KI \leftarrow KI + KI1$

45 $KFB \leftarrow KP + KI$

46 $X = 1$ ? — NO

YES

47 CALCULATION OF KD

48 $KFF \leftarrow DLTA \cdot KD \cdot K1$

49 $KFF \leftarrow 0$

50 $OUTPUT \leftarrow KTGT + KFB + KFF$

END

# Fig.9

# Fig.10

# Fig.11

KD3

1

0        Z        |E|

# Fig.12

KD4

1

0   Z        |E|

# Fig.13

CORRECTION CONTROL

60 — CALCULATION OF KTGT

61 — $|E| > z$ ? — NO

YES

62 — CALCULATION OF KP

63 — CALCULATION OF KI1

64 — $KI \leftarrow KI + KI1$

65 — $KFB \leftarrow KP + KI$

66 — CALCULATION OF KD1

67 — CALCULATION OF KD2

68 — CALCULATION OF KD3

69 — CALCULATION OF KD4

70 — $KFF \leftarrow DLTA \cdot KD1 \cdot KD2 \cdot KD3 \cdot KD4 \cdot K1$

71 — $OUTPUT \leftarrow KTGT + KFB + KFF$

END

# Fig.14

```
        ┌──────────────────────┐
        │ CALCULATION OF KD2   │
        └──────────────────────┘
                    │
        ┌──────────────────────┐
        │ CALCULATION OF KD21  │──── 75
        └──────────────────────┘
                    │
        ┌──────────────────────┐
        │ CALCULATION OF KD22  │──── 76
        └──────────────────────┘
                    │
        ┌──────────────────────┐
        │ KD2←KD21・KD22       │──── 77
        └──────────────────────┘
                    │
             ┌──────────┐
             │   END    │
             └──────────┘
```

# Fig.15

```
        ┌──────────────────────┐
        │ CALCULATION OF KD3   │
        └──────────────────────┘
                    │
    80          ◇
            DLTA < 0          NO ──────────┐
                ?                           │
               YES                          │
    81          ◇                      84   ◇
            E > 0    NO   YES          E < 0
                ?                          ?
               YES                        NO
    82  ┌──────────────────┐       83  ┌──────────┐
        │ CALCULATION OF   │           │ KD3 ← 1  │
        │ KD3 USING FIG.11 │           └──────────┘
        └──────────────────┘
                    │
             ┌──────────┐
             │   END    │
             └──────────┘
```

# Fig.16

90 — ◇ |E| > z ?

NO → 91 — CT ← 0

YES

94 — CT ← CT +1

92 — ◇ CT > CT1 ?

NO → 93 — KD4 ← 1

95 — CALCULATION OF KD4 USING FIG.12

END